# EUROPÄISCHE PATENTSCHRIFT

(11) **EP 2 977 714 B1**
(45) Veröffentlichungstag und Bekanntmachung des Hinweises auf die Patenterteilung: **18.05.2016**
(21) Anmeldenummer: 14177990.0
(22) Anmeldetag: 22.07.2014
(51) Int. Cl.: G01B 5/012, G01B 7/012, G01B 3/22

(54) **Tastmessgerät mit einem Tastarm mit einem konischen Tastkörper**
Tactile measurement instrument with a tactile arm having a conical tactile body
Palpeur de mesure doté d'un bras palpeur et d'un corps de palpeur conique

(43) Veröffentlichungstag der Anmeldung: 27.01.2016
(73) Patentinhaber: Tschorn GmbH, 73660 Urbach (DE)
(72) Erfinder: Tschorn, Ralf, 73655 Plüderhausen (DE)
(74) Vertreter: Rüger, Barthelt & Abel

(56) Entgegenhaltungen:
- DE-A1-102011 056 736
- DE-U1- 29 824 806
- US-A- 5 222 304
- US-A1- 2014 109 420

## Beschreibung

Die Erfindung betrifft ein Tastmessgerät, das zum Antasten von Werkstücken, Werkzeugen oder anderen Objekten verwendet werden kann. Das Tastmessgerät weist ein Gehäuse mit einer Gehäuseachse auf. Ein Tastarm ist mit Hilfe eines Tastarmlagers um wenigstens eine Schwenkachse schwenkbar gelagert. Der Tastarm erstreckt sich ausgehend vom Tastarmlager entlang einer Tastarmachse zu einem freien äußeren Ende hin. Dieses freie äußere Ende ist an einem Tastkörper des Tastarms angeordnet. Eine Kopplungseinrichtung koppelt den Tastarm mit einer Anzeigeeinheit. Über die Kopplungseinrichtung wird erreicht, dass eine sich ändernde Schwenkposition des Tastarms um die wenigstens eine Schwenkachse durch die Anzeigeeinheit angezeigt wird. Die Kopplungseinrichtung kann den Tastarm mechanisch und/oder elektrisch und/oder magnetisch und/oder optisch mit der Anzeigeeinheit koppeln. Vorzugsweise ist eine rein mechanische Kopplung vorgesehen.

Ein solches Tastmessgerät ist beispielsweise aus DE 10 2011 056 736 A1 bekannt. Der Tastarm weist dort einen als Tastkugel ausgeführten Tastkörper auf. Problematisch ist dabei, dass die Tastkugel beim Antasten von Objekten, die eine gekrümmte Oberfläche aufweisen, nicht ohne weitere Maßnahmen einen korrekten Messwert liefert. Beispielsweise können Bearbeitungswerkzeuge, wie Fräswerkzeuge oder Drehmeißel oder andere spanabhebende Werkzeuge Schneidplatten aufweisen, die einen Radius oder eine andere Krümmung aufweisen können. Beim Antasten dieser Schneidplatte mit einer Tastkugel kann es daher zu Fehlern kommen, wenn die Antaststelle nicht exakt eingestellt und vorgegeben ist. Im Einzelfall ist eine derartige Einstellung der Antaststelle zwischen der Tastkugel und einer gekrümmten Oberfläche des Objekts in der Regel nicht oder zumindest nicht mit vertretbarem Aufwand möglich.

Aus US 5 222 304 A. US 2014/0109420 A1 uns DE 298 24 806 U1 sind konische Tastkörper für ein Tastmessgerät bekannt.

Es kann daher als Aufgabe der vorliegenden Erfindung angesehen werden, ein Tastmessgerät zu schaffen, das sich insbesondere für das Antasten von Objekten mit einer gekrümmten Fläche eignet.

Diese Aufgabe wird durch ein Tastmessgerät mit den Merkmalen des Patentanspruches 1 gelöst. Das Eingangs geschilderte Tastmessgerät weist einen Tastkörper, der sich ausgehend von dem freien äußeren Ende des Tastarms bzw. des Tastköpers zu einem inneren Ende des Tastköpers konisch verjüngt. Vorzugsweise ist der Tastkörper rotationssymmetrisch um die Tastarmachse ausgeführt und hat die Form eines Kegelstumpfes. Bei einem Ausführungsbeispiel ist die Länge des Tastkörpers zwischen dem äußeren Ende und dem inneren Ende entlang der Tastarmachse größer als die Breite des Tastkörpers rechtwinklig zu der Tastarmachse.

Konzentrisch zu der Tastarmachse hat der Tastkörper eine erste Tastfläche, mit der auch gekrümmte Oberflächen eines Objekts angetastet werden können. Diese erste Tastfläche des Tastkörpers legt sozusagen eine Tangente an eine gekrümmte Oberfläche eines Objekts an. Das Maximum eines gekrümmten Bereichs lässt sich dadurch beispielsweise einfacher finden. Durch die Ausgestaltung des Tastkörpers ist ein einfacheres korrektes Antasten des Objekts möglich. Beispielsweise kann im Unterschied zu einer Tastkugel auch ein linienhafter Kontakt mit dem Objekt erfolgen. Geht etwa ein gerade verlaufender Kantenabschnitt an einer Stelle, beispielsweise einer Ecke, in einen gekrümmten Kantenabschnitt über, kann ein linienhafter Kontakt zu dem geraden Kantenabschnitt hergestellt und ein korrektes Antasten erreicht werden. Bei einer punktförmigen Antaststelle besteht die Gefahr, dass die Antaststelle an dem gekrümmten Kantenabschnitt liegt und zu fehlerhaften Messergebnissen führt.

Es ist vorteilhaft, wenn der Tastarm mittels des Tastarmlagers um mehrere Schwenkachsen oder in alle Richtungen schwenkbar gelagert ist. Bei einem Ausführungsbeispiel sind unendlich viele Schwenkachsen vorhanden. Sämtliche Schwenkachsen liegen in einer gemeinsamen Ebene und schneiden sich in einem Mittelpunkt. Der Tastarm kann durch eine Kugelgelenklagerung des Tastarmlagers in alle Richtungen bewegt werden.

Es ist außerdem vorteilhaft, wenn der Tastarm mittels des Tastarmlagers entlang der Gehäuseachse verschiebbar gelagert ist. Zusätzlich zu der Schwenkbarkeit um wenigstens eine Schwenkachse kann daher ein Antasten entlang der Gehäuseachse und/oder der Tastarmachse erfolgen.

Es ist vorteilhaft, wenn der Tastarm mittels einer Vorspanneinrichtung in eine Ausgangslage gedrängt wird. Bei einem Ausführungsbeispiel stimmt die Tastarmachse mit der Gehäuseachse in der Ausgangslage überein.

Die erste Tastfläche ist erfindungsgemäß durch die Mantelfläche des Kegelstumpfes gebildet ist. Am äußeren und am inneren Ende des Tastköpers kann anstelle einer scharfen Kante jeweils eine Fase oder alternativ ein Radius vorhanden sein.

Die Dimensionierung des Tastkörpers ist erfindungsgemäß derart vorgegeben, dass die Anzeigeeinheit eine Nullstellung oder eine andere Ausrichtstellung anzeigt, wenn sich die Gehäuseachse entlang der ersten Tastfläche erstreckt und die Tastfläche dabei nicht an einem Punkt durchdringt. Um dies zu erreichen, kann zur Dimensionierung des Tastkörpers der Durchmesser der Tastkörpers am äußeren Ende und/oder der Durchmesser des Tastkörpers am inneren Ende und/oder der Öffnungswinkel des konischen Tastkörpers und/oder der Abstand des Tastkörpers vom Tastarmlager vorgegeben werden. Die Position und Dimensionierung des Tastkörpers muss jedenfalls so gewählt werden, dass die erste Tasterfläche auf einer bestimmbaren Kegelmantelfläche liegt. Diese Kegelmantelfläche des Tastmessgerätes so bestimmt bzw. vorgegeben, dass die Gehäuseachse in der Nullstellung entlang der Außenlinie der Tastarmfläche oder parallel dazu verläuft.

Bei einem Ausführungsbeispiel kann die Gehäuseachse eine Messachse bilden, die beispielsweise durch einen Einspannschaft des Gehäuses definiert ist. Wird das Tastmessgerät über den Einspannschaft in einem Spannfutter eingespannt, so zeigt somit die Nullstellung oder Ausrichtstellung der Anzeigeeinheit an, dass sich die Antaststelle zwischen dem Tastkörper und einer Objektoberfläche, beispielsweise einer Schneidkante, an der Messachse befindet, die dann mit der Zentralachse des Spannfutters übereinstimmt.

Es ist weiterhin vorteilhaft, wenn der Tastkörper an seinem äußeren Ende eine rechtwinklig zur Tastarmachse ausgerichtete zweite Tastfläche aufweist. Wie erläutert, kann zwischen der zweiten Tastfläche und der ersten Tastfläche eine scharfe Kante oder alternativ eine Fase vorhanden sein.

Bei einem Ausführungsbeispiel ist die zweite Tastfläche vorzugsweise als Kreisfläche ausgeführt. Mit dieser ebenen zweiten Tastfläche können auch in Richtung der Tastarmachse bzw. der Gehäuseachse konvex gekrümmte Objektoberflächen angetastet werden.

Es ist außerdem vorteilhaft, wenn der konische Tastkörper einen Öffnungswinkel aufweist, der kleiner ist als 10° oder kleiner ist als 5°. Zusätzlich oder alternativ kann der Öffnungswinkel größer als 3° oder größer als 4° sein.

Bei einem Ausführungsbeispiel ist die Nullstellung oder Ausrichtstellung der Anzeigeeinheit nicht einstellbar. Bei einer unveränderten Tastarmstellung kann also die Anzeigestellung der Anzeigeeinheit nicht verändert werden. Die Anzeigestellung der Anzeigeeinheit ist fest mit der Tastarmstellung gekoppelt.

Vorteilhafte Ausführungen der Erfindung ergeben sich aus den abhängigen Patentansprüchen, der Beschreibung sowie der Zeichnung. Nachfolgend wird ein bevorzugtes Ausführungsbeispiel des Tastmessgeräts anhand der beigefügten Zeichnung im Einzelnen erläutert. Es zeigen:
Figur 1 ein Ausführungsbeispiel des Tastmessgeräts in einer Draufsicht auf die Anzeigeeinheit mit Blickrichtung rechtwinklig zu einer Gehäuseachse eines Gehäuses des Tastmessgeräts,
Figur 2 eine schematische, blockschaltbildähnliche Darstellung des Tastmessgerätes nach Figur 1, wobei sich der Tastarm in seiner Ausgangsstellung befindet,
Figur 3 die Darstellung des Tastmessgerätes gemäß Figur 2, wobei sich der Tastarm in einer ausgelenkten Schwenkstellung befindet,
Figur 4 die Darstellung des Tastmessgerätes nach Figur 2, wobei sich der Tastarm in einer translatorisch ausgelenkten Stellung befindet.

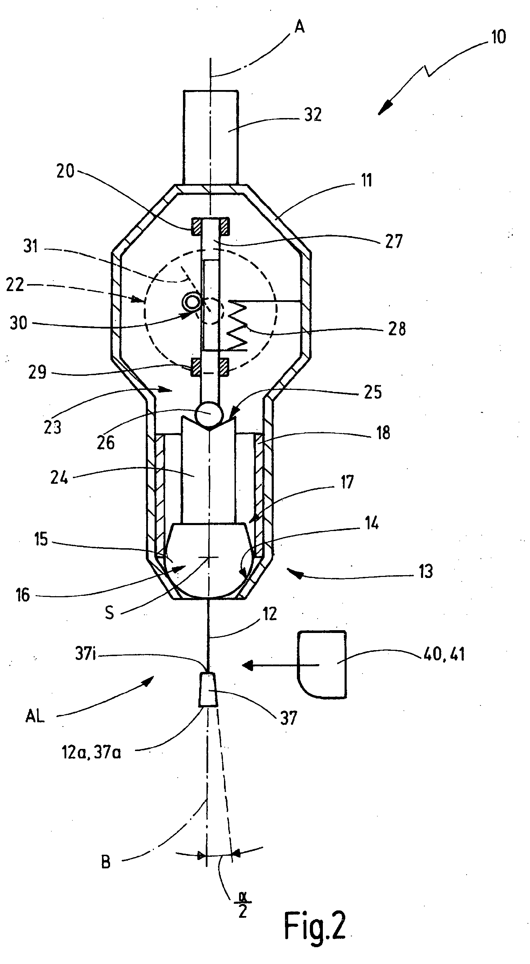

In der Zeichnung ist ein Tastmessgerät 10 mit einem Gehäuse 11 veranschaulicht. Ein Tastarm 12 ist über ein Tastarmlager 13 (Figuren 2 bis 4) um wenigstens eine Schwenkachse S schwenkbar am Gehäuse 11 gelagert. Bei dem hier dargestellten Ausführungsbeispiel ist das Tastarmlager 13 dazu vorgesehen, den Tastarm 12 in alle Richtungen quer zu einer Gehäuseachse A des Gehäuses 11 zu lagern. Sämtliche Schwenkachsen S liegen in einer gemeinsamen Ebene, die rechtwinklig zur Gehäuseachse A ausgerichtet ist.

Zur Erreichung dieser Schwenklagerung hat das Tastarmlager 13 eine am Gehäuse 11 konische erste Lagerfläche 14. Ein Lagerkörper 15 hat einen Kugelsegmentabschnitt oder Halbkugelabschnitt, der eine Außenfläche 16 aufweist, die an der ersten Lagerfläche 14 anliegt, wodurch ein Kugelgelenklager für den Tastarm 12 bereitgestellt ist.

Der Tastarm 12 erstreckt sich ausgehend vom Lagerkörper 15 entlang einer Tastarmachse B, bis zu einem äußeren Ende 12a hin.

Im Gehäuse 11 ist außerdem eine zylindrische zweite Lagerfläche 17 vorhanden, die benachbart zu der ersten Lagerfläche 13 angeordnet ist und beim Ausführungsbeispiel durch die Innenfläche einer Führungshülse 18 gebildet ist. Der Lagerkörper 15 kann entlang der Gehäuseachse A entlang der zweiten Lagerfläche 17 verschoben werden. Somit ist das Tastmessgerät 10 beispielsgemäß als 3D-Tastmessgerät ausgeführt.

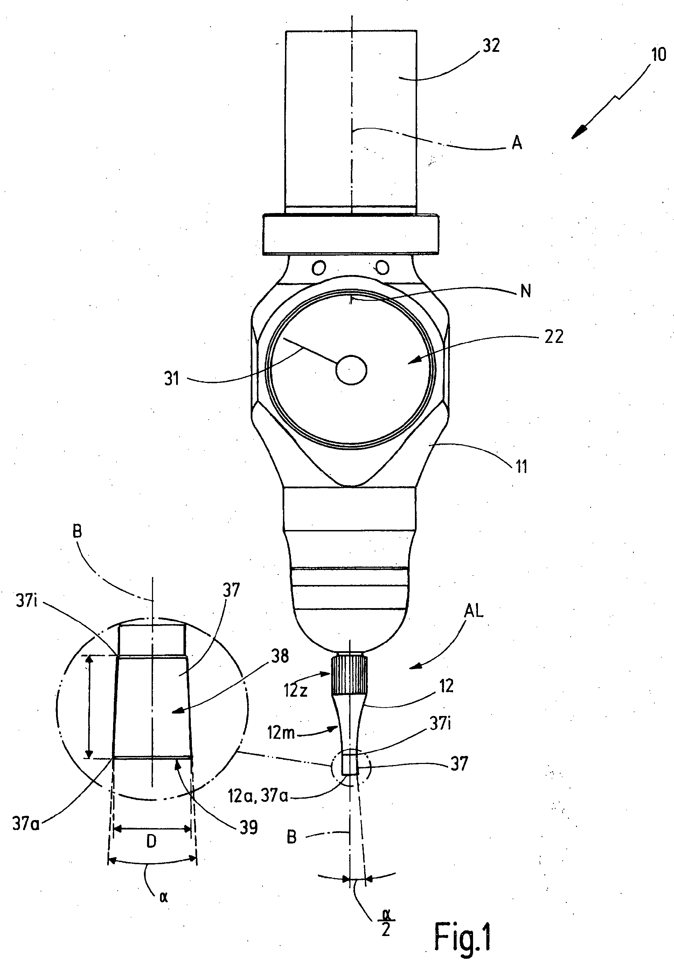

Das Tastmessgerät 10 weist eine Anzeigeeinheit 22 auf, die einer Bedienperson die Position des Tastarms 12 bzw. die Bewegung des Tastarms 12 anzeigt. Über die Anzeigeeinheit 22 wird eine translatorische Auslenkung des Tastarms 12 entlang der Gehäuseachse A und auch eine Schwenkauslenkung um die wenigstens eine Schwenkachse S aus einer Ausgangslage AL (Figuren 1 und 2) angezeigt.

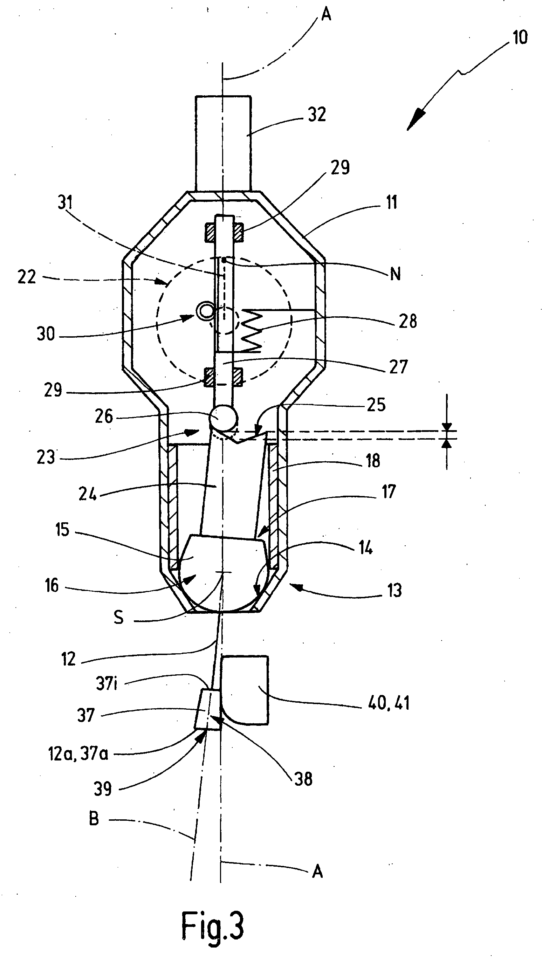

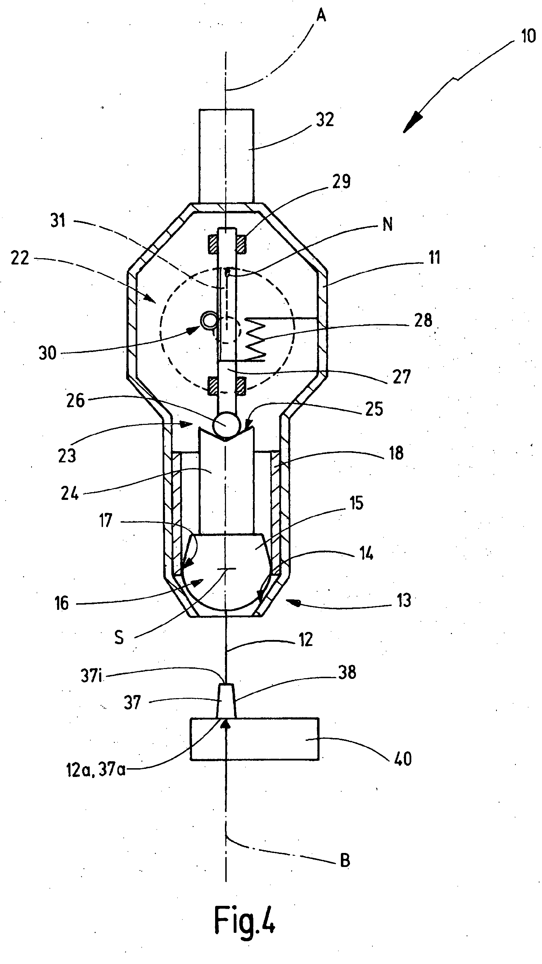

In Figur 3 ist schematisch eine Auslenkung des Tastarms 12 um die Schwenkachse S und in Figur 4 eine translatorische Auslenkung entlang der Gehäuseachse A veranschaulicht.

Zur Kopplung des Tastarms 12 mit der Anzeigeeinheit 22 ist eine Kopplungseinrichtung 23 vorhanden. Bei dem hier beschriebenen Ausführungsbeispiel ist die Kopplungseinrichtung rein mechanisch ausgeführt, um die aktuelle Tastarmstellung bzw. die aktuelle Bewegung des Tästarms 12 an die Anzeigeeinrichtung 22 zu übermitteln. Alternativ hierzu könnte auch eine Kopplungseinrichtung vorgesehen werden, die elektrisch und/oder magnetisch und/oder optisch und/oder mechanisch arbeitet.

Zu der Kopplungseinrichtung 23 gehört beispielsgemäß ein Tasthebel 24, der mit dem Lagerkörper 15 verbunden ist und sich in der Ausgangslage AL des Tastarms 12 entlang der Gehäuseachse A erstreckt. Der Tasthebel 24 erstreckt sich stets vom Lagerkörper 15 weg entgegengesetzt zum Tastarm 12 entlang der Tastarmachse B. An seinem dem Lagerkörper 15 entgegengesetzten Ende weist der Tasthebel 24 eine Steuerfläche 25 auf. Die Steuerfläche 25 ist konkav ausgeführt und symmetrisch zur Tastarmachse B ausgestaltet. Bei dem hier beschriebenen Ausführungsbeispiel hat die Steuerfläche 25 die Gestalt einer Kegelmantelfläche.

An der Steuerfläche 25 liegt ein Steuerkörper an, der beispielsgemäß als Steuerkugel 26 ausgestaltet ist. Die Steuerkugel ist an einem entlang der Gehäuseachse A verschiebbar gelagerten Steuerstößel 27 angeordnet. Über eine Vorspanneinrichtung 28, die beim Ausführungsbeispiel durch wenigstens eine Feder gebildet ist, ist die Steuerkugel 26 mittels des Steuerstößels 27 gegen die Steuerfläche 25 gedrängt. Der Steuerstößel 27 ist über wenigstens ein und beispielsgemäß zwei Führungen 29 entlang der Gehäuseachse A und verschiebbar geführt im Gehäuse 11 gelagert. Der Steuerstößel 27 ist nur in einem Freiheitsgrad bewegbar.

Der Steuerstößel 27 ist über ein Getriebe 30 der Kopplungseinrichtung 23 mit einem Zeiger 31 der Anzeigeeinheit 22 gekoppelt. Beispielsweise kann der Steuerstößel 27 eine sich parallel zur Gehäuseachse A erstreckende Verzahnung nach Art einer Zahnstange aufweisen, mit der ein erstes Zahnrad des Getriebes 30 in Eingriff steht. Das Getriebe 30 kann neben diesem ersten Zahnrad weitere Zahnräder oder andere Getriebeelemente zur Übertragung der Längsbewegung des Steuerstößels 27 auf den Zeiger 31 der Anzeigeeinrichtung 22 haben. Auch andere Ausgestaltungen des Getriebes 30 sind möglich.

An dem Gehäuse ist ein Einspannschaft 32 vorhanden, der auf der dem Tastarm 12 entgegengesetzten Seite des Gehäuses 11 angeordnet ist. Der Einspannschaft 32 dient dazu, das Tastmessgerät 10 in ein Spannfutter einer Bearbeitungsmaschine einzuspannen. Der Einspannschaft 32 hat eine kreiszylindrische Gestalt. Die Längsmittelachse des Einspannschaftes 32 definiert die Gehäuseachse A, die eine Messachse des Tastmessgeräts 10 darstellt.

Wie erläutert, erstreckt sich der Tastarm 12 ausgehend vom Tastarmlager 13 bzw. vom Lagerkörper 15 entlang einer Tastarmachse B bis zu einem äußeren Ende 12a des Tastarms 12 hin. Im Bereich des äußeren Endes 12a hat der Tastarm 12 einen Tastkörper 37. In Figur 1 ist der Tastkörper 37 auch vergrößert veranschaulicht. Der Tastkörper 37 hat ein äußeres Ende 37a, das auch das äußere Ende 12a des Tastarms 12 darstellt. Ausgehend von diesem äußeren Ende 37a verjüngt sich der Tastkörper 37 konisch zu einem inneren Ende 37i hin entlang der Tastarmachse B. Zwischen dem äußeren Ende 37a und dem inneren Ende 37i hat der Tastkörper 37 eine Länge L (Figur 1). Die Länge L ist bei dem hier beschriebenen Ausführungsbeispiel größer als der Durchmesser D des Tastkörpers 37 an seinem äußeren Ende 37a. Wenn der Tastarm 12 lang ist und damit der Abstand des Tastkörpers 37 von dem Tastarmlager 13 zunimmt, kann der Durchmesser D in Abwandlung zu dem veranschaulichten Ausführungsbeispiel auch größer sein als die die Länge L des Tastkörpers 37. Der Durchmesser des Tastkörpers 37 an seinem inneren Ende 37i ist kleiner als der Durchmesser D an seinem äußeren Ende 37a.

Der Tastkörper 37 hat eine erste Tastfläche 38, die die Tastarmachse B koaxial umschließt. Die erste Tastarmfläche 38 entspricht der Mantelfläche eines Kegelstumpfes. Die erste Tastfläche 38 erstreckt sich im Wesentlichen vom äußeren Ende 37a bis zum inneren Ende 37i. Wie in Figur 1 veranschaulicht, kann der Tastkörper 37 am äußeren Ende 37a sowie am inneren Ende 37i eine Fase oder einen Radius aufweisen, um eine scharfkantige Ausführung zu vermeiden. Durch die Fasen oder Radien an den Kanten werden zwar Abweichungen von der konischen Form des Tastkörpers 37 erzeugt, so dass sich die erste Tastarmfläche 38 nicht vollständig zwischen dem äußeren Ende 37a und dem inneren Ende 37i erstreckt. Die Abmessungen der Fasen und/oder der Radien, entlang der Tastarmachse B gemessen, sind jedoch gegenüber der Länge L vernachlässigbar klein. Die Abmessung entlang der Tastarmachse B gemessen von einer der Fasen und/oder einem der Radien ist zumindest um den Faktor 15 oder 20 oder 25 oder 30 kleiner als die Länge L.

Der Tastkörper 37 hat bei dem hier beschriebenen bevorzugten Ausführungsbeispiel an seinem äußeren Ende 37a eine zweite Tastfläche 39, die beispielsgemäß rechtwinklig zur Tastarmachse B ausgerichtet ist. Die zweite Tastfläche 39 hat die Form einer Kreisfläche.

Der konische Tastkörper 37 hat einen Öffnungswinkel α. Der Öffnungswinkel α beträgt vorzugsweise mindestens 3° bis 4°. Vorzugsweise beträgt der Öffnungswinkel α höchstens 10° und bei dem hier beschriebenen Ausführungsbeispiel höchstens 5°. Bei einer konkreten Ausführungsform des Tastmessgerätes 10 hat der konische Tastkörper 37 einen Öffnungswinkel α von 4,88°.

Im Anschluss an das innere Ende 37i bzw. die am inneren Ende 37i vorhandene Fase erweitert sich der Tastarm 12 in einem mittleren Abschnitt 12m entlang der Tastarmachse B vom Tastkörper 37 weg. Auf der dem Tastkörper 37 entgegengesetzten Seite schließt sich an den mittleren Abschnitt 12m ein zylindrischer Abschnitt 12z an, der mit dem Lagerkörper 15 verbunden ist. Innerhalb des zylindrischen Abschnitts 12z kann der Tastarm 12 eine Schwächung aufweisen, die eine Sollbruchstelle definiert, wenn auf den Tastarm 12 eine zu große Schwenkkraft ausgeübt wird. Dadurch können Beschädigungen am Tastmessgerät 10 vermieden werden.

Über die Kopplungseinrichtung 23 ist eine feste, unveränderliche Zuordnung zwischen der Stellung des Tastarms 12 und der Stellungsanzeige der Anzeigeeinheit 22 vorgegeben. Eine Justage- oder Kalibriereinrichtung, um die Stellungsanzeige der Anzeigeeinheit 22 bei einer unveränderten Stellung bzw. Position des Tastarms 12 zu verändern, ist nicht vorhanden.

Das Tastmessgerät 10 mit dem konischen Tastkörper 37 eignet sich auch zum Antasten von konvex gekrümmten Kanten oder Oberflächen eines Objekts 40. In den Figuren 2 und 3 ist beispielhaft das Antasten einer mit einem Radius versehenen Schneidplatte 41 veranschaulicht. Das Objekt 40 bzw. die Schneidplatte 41 wird mit Hilfe der ersten Tastfläche 38 angetastet. Dazu wird wie folgt vorgegangen:
Das Tastmessgerät 10 wird mit Hilfe des Einspannschaftes 32 in ein Spannfutter der Bearbeitungsmaschine eingespannt. In der Ausgangslage AL erstreckt sich der Tastarm 12 entlang der Gehäuseachse A. Mittels der Vorspanneinrichtung 28 wird der Tastarm 12 in die Ausgangslage AL vorgespannt.

Das Objekt 40 und beispielsweise die Schneidplatte 41 eines Werkzeugs wird relativ zum Spannfutter und mithin relativ zum Tastarm 12 gegen die erste Tastfläche 38 des Tastkörpers 37 bewegt. Das anzutastende Objekt wird gegen die erste Tastfläche 38 des Tastkörpers 37 bewegt, wodurch der Tastarm aus seiner Ausgangslage AL um eine Schwenkachse S ausgelenkt bzw. geschwenkt wird (Figur 3).

Durch das Schwenken des Tastarms 12 aus seiner Ausgangslage AL heraus in eine ausgelenkte Lage, wird die Steuerkugel 36 aus ihrer ursprünglichen Lage (gepunktet in Figur 3 veranschaulicht) durch die Steuerfläche 25 entlang der Gehäuseachse A bewegt, wodurch auch der Steuerstößel 27 verschoben wird. Diese Bewegung wird über das Getriebe 30 auf die Anzeigeeinheit 22 übertragen. Der Zeiger 31 zeigt die entsprechende verändernde Stellung an.

Bei dem hier beschriebenen Ausführungsbeispiel ist die Dimensionierung des Tastkörpers 37 derart auf die Kopplungseinrichtung 23, die Länge des Tastarms 12 sowie das Tastarmlager 13 abgestimmt, dass die Anzeigeeinheit 22 eine Ausrichtstellung oder Nullstellung N anzeigt, wenn die Gehäuseachse A entlang der ersten Tastfläche 38 verläuft. Dabei befindet sich das Objekt 40 bzw. die Schneidplatte 41 in einer Ausrichtposition. Diese Situation ist schematisch in Figur 3 veranschaulicht. Die Gehäuseachse A erstreckt sich dabei zwischen dem inneren Ende 37i und dem äußeren Ende 37a des Tastkörpers 37 entlang der ersten Tastfläche 38. Die Gehäuseachse A schneidet die erste Tastfläche 38 daher nicht an einem einzigen Punkt, sondern verläuft entlang der ersten Tastfläche 38. Ein Normalenvektor auf die erste Tastfläche 38 an der Antaststelle zwischen dem Objekt 40 und dem Tastkörper 37 ist dann rechtwinklig zur Gehäuseachse A ausgerichtet.

Alternativ dazu kann die Nullstellung N auch angezeigt werden, wenn sich die Gehäuseachse A parallel zu einer Außenlinie der ersten Tastfläche 38 erstreckt, wobei die Außenlinie in einer Ebene liegt, die bei ausgelenktem Tastarm 12 durch die Tastarmachse B und die Gehäuseachse A aufgespannt ist. Der verbleibende Versatz zwischen dem Objekt 40 und der Gehäuseachse B kann einer Bedienperson angegeben werden (beispielsweise in der Bedienungsanleitung und/oder unmittelbar auf dem Tastmessgerät). Wenn das Objekt 40 genau an bzw. auf der Gehäuseachse A ausgerichtet werden soll, kann das Objekt 40 um den bekannten Versatz aus der Lage weiterbewegt werden, in der die Nullstellung N angezeigt wurde.

In Figur 4 ist schematisch beispielhaft das Verschieben des Tastarms 12 entlang der Gehäuseachse A bzw. entlang der Tastarmachse B veranschaulicht. Dabei wird der Lagerkörper 15 entlang der zweiten Lagerfläche 17 geführt verschoben. Entsprechend wird diese Bewegung über die Steuerkugel 26 auf den Steuerstößel 27 und wiederum über das Getriebe 30 auf die Anzeigeeinheit 22 übertragen. Demgemäß zeigt hier auch der Zeiger 31 der Anzeigeeinheit 22 die aktuelle Stellung wie in Figur 4 beispielhaft dargestellt die Nullstellung N an.

Es versteht sich, dass in Abwandlung zu der veranschaulichten Ausführungsform auch mehr als ein Zeiger 31 vorhanden sein kann. Es können beispielsweise zwei oder mehr Zeiger vorhanden sein, die auf einer jeweils zugeordneten Skala unterschiedliche Größenordnungen anzeigen. Beispielsweise kann ein Zeiger einer Millimeterskala zugeordnet sein, während ein anderer Zeiger Zehntel oder Hundertstel Millimeter anzeigt.

Wenn eine andere, abgewandelte Kopplungseinrichtung 23 verwendet wird, können auch digital arbeitende Anzeigeeinheiten 22 mit einem Display ohne mechanische Zeiger verwendet werden.

Die Erfindung betrifft ein Tastmessgerät 10 mit einem Gehäuse 11, das eine Gehäuseachse A bzw. eine Messachse definiert. Am Gehäuse 11 ist ein Tastarm 12 mittels eines Tastarmlagers 13 zumindest um eine Schwenkachse S schwenkbar gelagert. Der Tastarm 12 erstreckt sich ausgehend vom Tastarmlager 13 entlang einer Tastarmachse B zu einem freien äußeren Ende 12a hin. Dieses äußere Ende 12a entspricht dem äußeren Ende eines Tastkörpers 37 des Tastarms 12. Der Tastkörper 37 erstreckt sich ausgehend von seinem äußeren Ende 37a zu seinem inneren Ende 37i entlang der Tastarmachse B und verjüngt sich dabei. Zwischen dem äußeren Ende 37a und dem inneren Ende 37i hat der Tastkörper 37 eine erste Tastfläche 38, die der Mantelfläche eine Kegelstumpfs entspricht. Über eine Kopplungseinrichtung 23 wird die Stellung bzw. Bewegung des Tastarms 12 an eine Anzeigeeinheit 22 übermittelt, die die jeweils aktuelle Stellung des Tastarms 12 anzeigt.

### Bezugszeichenliste:

- 10: Tastmessgerät
- 11: Gehäuse
- 12: Tastarm
- 12a: äußeres Ende des Tastarms
- 12m: mittlerer Abschnitt des Tastarms
- 12z: zylindrischer Abschnitt des Tastarms
- 13: Tastarmlager
- 14: erste Lagerfläche
- 15: Lagerkörper
- 16: Außenfläche
- 17: zweite Lagerfläche
- 18: Führungshülse

- 22: Anzeigeeinheit
- 23: Kopplungseinrichtung
- 24: Tasthebel
- 25: Steuerfläche
- 26: Steuerkugel
- 27: Steuerstößel
- 28: Vorspanneinrichtung
- 29: Führung
- 30: Getriebe
- 31: Zeiger
- 32: Einspannschaft

- 37: Tastkörper
- 37a: äußeres Ende des Tastkörpers
- 37i: inneres Ende des Tastkörpers
- 38: erste Tastfläche
- 39: zweite Tastfläche

- 40: Objekt
- 41: Schneidplatte

- α: Öffnungswinkel
- A: Gehäuseachse
- AL: Ausgangslage
- B: Tastarmachse
- L: Länge des Tastkörpers
- S: Schwenkachse

## Patentansprüche

1. Tastmessgerät (10),
mit einem eine Gehäuseachse (A) aufweisenden Gehäuse (11),
mit einem mittels eines Tastarmlagers (13) am Gehäuse (11) um wenigstens eine Schwenkachse (S) schwenkbar gelagerten Tastarm (12), der sich ausgehend vom Tastarmlager (13) entlang einer Tastarmachse (B) zu einem freien äußeren Ende (12a) erstreckt, das außerhalb des Gehäuses (11) angeordnet ist,
wobei sich das freie äußere Ende (12a) des Tastarms (12) an einem Tastkörper (37) des Tastarms (12) befindet, wobei sich der Tastkörper (37) ausgehend von dem freien äußeren Ende (12a, 37a) zu einem inneren Ende (37i) konisch verjüngt,
und mit einer Kopplungseinrichtung (23), die den Tastarm (12) mit einer Anzeigeeinheit (22) derart koppelt, dass eine sich ändernde Schwenkposition des Tastarms (12) um die wenigstens eine Schwenkachse (S) mittels der Anzeigeeinheit (22) angezeigt wird,
wobei der Tastkörper (37) eine konzentrisch um die Tastarmachse (B) angeordnete erste Tastfläche (38) aufweist und wobei die Dimensionierung des Tastkörpers (37) derart vorgegeben ist, dass die Anzeigeeinheit (22) eine Nullstellung (N) anzeigt, wenn sich der Tastarm in einer Schwenkstellung befindet, in der sich die Gehäuseachse (A) entlang der ersten Tastfläche (38) erstreckt.

2. Tastmessgerät nach Anspruch 1,
**dadurch gekennzeichnet, dass** der Tastarm (12) mittels dem Tastarmlager (13) um mehrere Schwenkachsen (S) oder in alle Richtungen schwenkbar gelagert ist.

3. Tastmessgerät nach Anspruch 1 oder 2,
**dadurch gekennzeichnet, dass** der Tastarm (12) mittels dem Tastarmlager (13) entlang der Gehäuseachse (A) und/oder Tastarmachse (B) verschiebbar gelagert ist.

4. Tastmessgerät nach einem der vorhergehenden Ansprüche,
**dadurch gekennzeichnet, dass** der Tastarm (12) mittels einer Vorspanneinrichtung (28) in eine Ausgangslage (AL) gedrängt wird.

5. Tastmessgerät nach einem der vorhergehenden Ansprüche,
**dadurch gekennzeichnet, dass** die Tastarmachse (B) und die Gehäuseachse (A) übereinstimmen, wenn sich der Tastarm (12) in einer unbeaufschlagten Ausgangslage (AL) befindet.

6. Tastmessgerät nach einem der vorhergehenden Ansprüche,
**dadurch gekennzeichnet, dass** der Durchmesser (D) des Tastkörpers (37) am äußeren Ende (37a) und/oder der Durchmesser des Tastkörpers (37) am inneren Ende (37i) und/oder der Öffnungswinkel (α) des Tastkörpers (37) und/oder der Abstand des Tastkörpers (37) vom Tastarmlager (13) derart vorgegeben ist, dass die Anzeigeeinheit (22) eine Nullstellung (N) anzeigt, wenn sich die Gehäuseachse (A) entlang der ersten Tastfläche (38) oder parallel zu einer Außenlinie der ersten Tastfläche (38) erstreckt, wobei die Außenlinie in der Ebene liegt, die bei ausgelenktem Tastarm (12) durch die Tastarmachse (B) und die Gehäuseachse (A) aufgespannt ist.

7. Tastmessgerät nach einem der vorhergehenden Ansprüche,
**dadurch gekennzeichnet, dass** der Tastkörper (37) an seinem äußeren Ende (37a) eine rechtwinkelig zu der Tastarmachse (B) ausgerichtete zweite Tastfläche (39) aufweist.

8. Tastmessgerät nach einem der vorhergehenden Ansprüche,
**dadurch gekennzeichnet, dass** der konische Tastkörper (37) einen Öffnungswinkel (α) aufweist, der kleiner ist als 10° oder kleiner ist als 5°.

9. Tastmessgerät nach einem der vorhergehenden Ansprüche,
**dadurch gekennzeichnet, dass** der konische Tastkörper (37) einen Öffnungswinkel (α) aufweist, der größer ist als 3° oder größer ist als 4°.

10. Tastmessgerät nach einem der vorhergehenden Ansprüche,
**dadurch gekennzeichnet, dass** die Länge (L) des Tastkörpers (37) entlang der Tastarmachse (B) größer ist als die Breite (D) des Tastkörpers (37) rechtwinkelig zu der Tastarmachse (B).

11. Tastmessgerät nach einem der vorhergehenden Ansprüche,
**dadurch gekennzeichnet, dass** eine Nullstellung (N) der Anzeigeeinheit (22) nicht einstellbar ist, so dass bei unveränderter Stellung des Tastarms (12) die Nullstellung (N) der Anzeigeeinheit (22) nicht veränderbar ist.

## Claims

1. Tactile measurement instrument (10),
having a housing (11) having a housing axis (A),
having a tactile arm (12) mounted pivotably around at least one pivot axis (S) by means of a tactile arm bearing (13) on the housing (11), said tactile arm extending from the tactile arm bearing (13) along a tactile arm axis (B) to a free outer end (12a) which is arranged outside the housing (11),
wherein the free outer end (12a) of the tactile arm (12) is located on a tactile body (37) of the tactile arm (12), wherein the tactile body (37) tapers in a conical manner from the free outer end (12a, 37a) to an inner end (37i),
and having a coupling device (23) which couples the tactile arm (12) to a display unit (22) in such a way that a changing pivot position of the tactile arm (12) around the at least one pivot axis (S) is displayed by means of the display unit (22),
wherein the tactile body (37) has a first tactile surface (38) arranged concentrically around the tactile arm axis (B) and wherein the dimensioning of the tactile body (37) is predetermined in such a way that the display unit (22) displays a zero position (N) if the tactile arm is located in a pivot position in which the housing axis (A) extends along the first tactile surface (38).

2. Tactile measurement instrument according to claim 1,
**characterised in that** the tactile arm (12) is mounted pivotably around several pivot axes (S) or in all directions by means of the tactile arm bearing (13).

3. Tactile measurement instrument according to claim 1 or 2,
**characterised in that** the tactile arm (12) is mounted moveably along the housing axis (A) and/or the tactile arm axis (B) by means of the tactile arm bearing (13).

4. Tactile measurement instrument according to one of the preceding claims,
**characterised in that** the tactile arm (12) is pushed into an initial position (AL) by means of a pre-tensioning device (28).

5. Tactile measurement instrument according to one of the preceding claims,
**characterised in that** the tactile arm axis (B) and the housing axis (A) coincide if the tactile arm (12) is located in an unloaded initial position (AL).

6. Tactile measurement instrument according to one of the preceding claims,
**characterised in that** the diameter (D) of the tactile body (37) at the outer end (37a) and/or the diameter of the tactile body (37) at the inner end (37i) and/or the angle of opening (α) of the tactile body (37) and/or the distance of the tactile body (37) from the tactile arm bearing (13) is predetermined in such a way that the display unit (22) displays a zero position (N) if the housing axis (A) extends along the first tactile surface (38) or parallel to an outer line of the first tactile surface (38), wherein the outer line lies in the plane which is spanned by the tactile arm axis (B) and the housing axis (A) when the tactile arm (12) is deflected.

7. Tactile measurement instrument according to one of the preceding claims,
**characterised in that** the tactile body (37) has a second tactile surface (39) which is aligned at a right angle to the tactile arm axis (B) on its outer end (37a).

8. Tactile measurement instrument according to one of the preceding claims,
**characterised in that** the conical tactile body (37) has an angle of opening (α) which is smaller than 10° or is smaller than 5°.

9. Tactile measurement instrument according to one of the preceding claims,
**characterised in that** the conical tactile body (37) has an angle of opening (α) which is greater than 3° or is greater than 4°.

10. Tactile measurement instrument according to one of the preceding claims,
**characterised in that** the length (L) of the tactile body (37) along the tactile arm axis (B) is greater than the width (D) of the tactile body (37) at a right angle to the tactile arm axis (B).

11. Tactile measurement instrument according to one of the preceding claims,
**characterised in that** a zero position (N) of the display unit (22) is not able to be adjusted, such that the zero position (N) of the display unit (22) is not able to be changed in the case of an unchanged position of the tactile arm (12).

## Revendications

1. Palpeur de mesure (10),
comprenant un boîtier (11) présentant un axe de boîtier (A),
comprenant un bras palpeur (12) qui est monté sur le boîtier (11) au moyen d'un palier de bras palpeur (13), avec possibilité de pivotement autour d'au moins un axe de pivotement (S), et qui, partant du palier de bras palpeur (13), s'étend le long d'un axe de bras palpeur (B) jusqu'à une extrémité extérieure libre (12a) qui est disposée à l'extérieur du boîtier (11),
sachant que l'extrémité extérieure libre (12a) du bras palpeur (12) se situe sur un corps de palpeur (37) du bras palpeur (12), le corps de palpeur (37) se rétrécissant sous une forme conique, en partant de l'extrémité extérieure libre (12a, 37a) jusqu'à une extrémité intérieure (37i),
et comprenant un dispositif de couplage (23) qui couple le bras palpeur (12) à une unité d'affichage (22), de manière à ce qu'un changement de la position de pivotement du bras palpeur (12) autour de l'axe de pivotement (S), au nombre d'au moins un, soit indiqué à l'aide de l'unité d'affichage (22),
sachant que le corps de palpeur (37) présente une première surface de palpage (38), disposée de façon concentrique autour de l'axe de bras palpeur (B), et sachant que le dimensionnement du corps de palpeur (37) est prédéfini de manière telle que l'unité d'affichage (22) indique une position zéro (N) lorsque le bras palpeur se trouve dans une position de pivotement dans laquelle l'axe de boîtier (A) s'étend le long de la première surface de palpage (38).

2. Palpeur de mesure selon la revendication 1, **caractérisé en ce que** le bras palpeur (12) est monté au moyen du palier de bras palpeur (13) de façon à pouvoir être pivoté autour de plusieurs axes de pivotement (S) ou dans toutes les directions.

3. Palpeur de mesure selon la revendication 1 ou 2, **caractérisé en ce que** le bras palpeur (12) est monté au moyen du palier de bras palpeur (13) de façon à pouvoir être déplacé le long de l'axe de boîtier (A) et/ou de l'axe de bras palpeur (B).

4. Palpeur de mesure selon l'une des revendications précédentes, **caractérisé en ce que** le bras palpeur (12) est poussé dans une position initiale (AL) au moyen d'un dispositif de précontrainte (28).

5. Palpeur de mesure selon l'une des revendications précédentes, **caractérisé en ce que** l'axe de bras palpeur (B) et l'axe de boîtier (A) coïncident lorsque le bras palpeur (12) se trouve dans une position initiale (AL) non sollicitée.

6. Palpeur de mesure selon l'une des revendications précédentes, **caractérisé en ce que** le diamètre (D) du corps de palpeur (37) à l'extrémité extérieure (37a) et/ou le diamètre du corps de palpeur (37) à l'extrémité intérieure (37i) et/ou l'angle d'ouverture (α) du corps de palpeur (37) et/ou la distance du corps de palpeur (37) par rapport au palier de bras palpeur (13) est prédéfini(e) de manière telle que l'unité d'affichage (22) indique une position zéro (N) lorsque l'axe de boîtier (A) s'étend le long de la première surface de palpage (38) ou parallèlement à une ligne extérieure de la première surface de palpage (38), sachant que la ligne extérieure se situe dans le plan qui est défini par l'axe de bras palpeur (B) et l'axe de boîtier (A) lorsque le bras palpeur (12) est dévié.

7. Palpeur de mesure selon l'une des revendications précédentes, **caractérisé en ce que** le corps de palpeur (37) présente à son extrémité extérieure (37a) une deuxième surface de palpage (39) qui est orientée à angle droit par rapport à l'axe de bras palpeur (B).

8. Palpeur de mesure selon l'une des revendications précédentes, **caractérisé en ce que** le corps de palpeur (37) conique présente un angle d'ouverture (α) qui est inférieur à 10° ou inférieur à 5°.

9. Palpeur de mesure selon l'une des revendications précédentes, **caractérisé en ce que** le corps de palpeur (37) conique présente un angle d'ouverture (α) qui est supérieur à 3° ou inférieur à 4°.

10. Palpeur de mesure selon l'une des revendications précédentes, **caractérisé en ce que** la longueur (L) du corps de palpeur (37) le long de l'axe de bras de palpeur (B) est supérieure à la largeur (D) du corps de palpeur (37), perpendiculairement à l'axe de bras palpeur (B).

11. Palpeur de mesure selon l'une des revendications précédentes, **caractérisé en ce qu'**il n'est pas possible de régler une position zéro (N) de l'unité d'affichage (22), de sorte que lorsque la position du bras palpeur (12) est inchangée, la position zéro (N) de l'unité d'affichage (22) ne peut pas être modifiée.
